# NOUVEAU FASCICULE DE BREVET EUROPEEN

(11) **EP 1 129 430 B2**
(45) Date de publication et mention de la décision concernant l'opposition: **13.07.2005**
(45) Mention de la délivrance du brevet: 17.04.2002
(21) Numéro de dépôt: 99954043.8
(22) Date de dépôt: 03.11.1999
(51) Int. Cl.: G06K 19/073, G07F 7/10

(54) **PROCEDE ET DISPOSITIF DE CONTROLE DU CYCLE DE VIE D'UN OBJET PORTATIF, NOTAMMENT D'UNE CARTE A PUCE**
VERFAHREN UND GERÄT ZUR ÜBERPRÜFUNG DES BETRIEBSZYKLUS EINES TRAGBAREN GEGENSTANDES, INSBESONDERE EINER CHIPKARTE
METHOD AND DEVICE FOR CONTROLLING A PORTABLE OBJECT LIFE CYCLE, IN PARTICULAR A SMART CARD

(30) Priorité: 13.11.1998 FR 9814517
(43) Date de publication de la demande: 05.09.2001
(73) Titulaire: GEMPLUS, 13881 Gémenos Cédex (FR)
(72) Inventeur: BIRKNER, Marc, F-13950 Cadolive (FR); GIRAUD, Jean, Luc, F-13400 Aubagne (FR); TALVARD, Laurent, Verdun, Ile des Soeurs QC H3E 1R9 (CA)
(86) Numéro de dépôt international: PCT/FR1999/002678
(87) Numéro de publication internationale: WO 2000/030030

(56) Documents cités:
- EP-A- 0 583 006
- WO-A-98/09257
- US-A- 5 473 690
- Schnittstellenspezifikation für die ec-Karte mit Chip, Personalisierung, Version 2.1.4, 26.09.1995, pages i, ii, 1-65
- W. Rankl/W. Effing, Handbuch der Chipkarten, 2. Auflage, Carl Hanser Verlag München Wien, 1996, pages 32,33,322,323,332-335, 368, 369
- Spécification prEN 1546-1, 1995, pages 1-26

## Description

L'invention concerne les objets électroniques portatifs tels que les cartes à microcircuits électroniques, dites cartes à puce qui, connectées à des dispositifs électroniques pour permettre à ces derniers de réaliser des fonctions particulières dans le cadre d'une ou plusieurs applications, nécessitent un contrôle de leurs étapes de vie. Lesdites cartes sont en effet généralement utilisées dans des applications (banque, communication, identité, santé...) nécessitant une grande sécurité contre les usages frauduleux. Ainsi, à titre d'exemple, le document US 5473690 présente une carte à puce comprenant plusieurs applications dont l'accès est protégé par mots de passe, un mot de passe étant dédié à un utilisateur. Connaissant un mot de passe, il est possible de sélectionner telle ou telle application. Cependant, on ne peut désactiver une application ou en limiter l'usage quel que soit l'utilisateur de la carte en fonction des étapes de vie de ladite carte.

L'invention s'applique plus généralement à tout système embarqué indépendant, doté d'une unité de traitement et des mémoires de programme et de données.

Il est connu dans le monde de la carte à puce que celle-ci résulte d'un assemblage d'un composant (comprenant en général un microprocesseur en relation avec des mémoires via des bus de communication), d'un module (réalisé à l'aide d'un métal conducteur) auquel est relié ledit composant (dans le cadre d'une carte à puce dite à contact) pour permettre audit composant d'être connecté à un dispositif électronique de lecture et/ou écriture (ou coupleur) et d'un corps de carte ou plus généralement d'un support sur lequel est intégré l'ensemble module/composant. Dans la cadre d'une carte à puce dite sans contact, ledit module est remplacé par une antenne et l'ensemble formé par le composant et ladite antenne est intégrée au sein dudit support.

La vie d'une carte à puce se décompose généralement en deux ensembles d'étapes se succédant les unes aux autres, correspondant respectivement à la fabrication et à l'exploitation de ladite carte. La composition des deux ensembles d'étapes forme un cycle de vie de ladite carte. La fabrication d'une carte à puce (à contact ou sans contact) est constituée de plusieurs étapes.

En effet, il est tout d'abord nécessaire de disposer d'un composant électronique qui est initialisé, isolé, puis relié à un module. Ledit composant et le module, auquel il est relié, sont par la suite intégrés sur ou au sein d'un support (généralement un corps de carte plastique) lui même imprimé à des fins d'identification ou de publicité. Par la suite la carte à puce ainsi obtenue est initialisée ou programmée pour répondre aux conditions d'utilisation dans le cadre d'applications.

Le second ensemble d'étapes de vie d'une carte à puce correspond à son exploitation. Cet ensemble peut lui-même être divisé en plusieurs étapes, chacune correspondant, par exemple, à l'implantation ou la suppression de services offerts par la carte à puce à l'utilisateur en fonction de son profil par exemple.

En outre différents acteurs (fabricant de composant, fabricant de cartes à puce, centre de personnalisation de cartes, émetteurde cartes, ou encore porteur de cartes) interviennent durant les différentes étapes de la fabrication et de l'exploitation d'une carte à puce. Ainsi, les composants sont fournis et parfois en partie initialisés par des fabricants de composants électroniques sur une tranche de silicium. Cette phase correspond à l'étape de fabrication du composant. L'étape suivante est la phase d'encartage réalisée par le fabricant de carte à puce. Elle inclut l'isolement d'un composant de la tranche de silicium, la connexion dudit composant à un module (ou antenne), l'intégration de l'ensemble sur leur support ou corps de carte. Suit la préparation de la structure applicative présente dans la mémoire programmable électriquement du composant. C'est l'étape de personnalisation électrique qui est réalisée par le fabricant des cartes à puce ou par un centre de personnalisation ou un tiers spécialisé dans la personnalisation des cartes ou par l'émetteur lui-même qui est chargé in fine de la distribution des cartes sur le marché. Cette phase de personnalisation électrique peut donc être décomposée en autant d'étapes qu'il y a d'acteurs ou d'intermédiaires. Par la suite, durant l'exploitation de la carte à puce, nous avons vu précédemment qu'il peut être intéressant de distinguer différentes étapes au gré de l'évolution du profil de l'utilisateur de la carte par exemple. Pour toutes ces raisons, il est donc important de suivre rigoureusement les étapes de vie d'une carte pour connaître à tout moment l'étape en-cours de ladite carte au sein de son cycle de vie. De plus, il est indispensable que, d'une part, l'accès en écriture ou en lecture de la mémoire programmable électriquement du composant d'une carte soit protégé durant l'échange de ladite carte (ou du composant) entre les différents acteurs et que d'autre part l'accès à ladite mémoire soit limité au fur et à mesure que se succèdent les étapes de vie de la carte citées précédemment, en activant ou désactivant des services par exemple. Pour finir, il est également nécessaire parfois de valider le contexte applicatif de la carte à puce avant que le porteur de celle-ci l'utilise sur le marché. Par exemple, un émetteur de carte à puce de type porte-monnaie électronique, doit être certain que la balance de ladite carte est bien nulle avant d'émettre la carte.

Pour tenter de répondre à ces exigences, différentes solutions sont utilisées à ce jour. Certaines solutions sont purement extérieures à la carte à puce (sécurisation physique des locaux où ladite carte est fabriquée, utilisation de moyens de transport eux-mêmes sécurisés...). D'autres solutions complémentaires aux premières, mais cette fois internes ou implantées dans la carte, sont aussi généralement utilisées. On utilise ainsi des secrets permettant de protéger l'accès en lecture/écriture de la mémoire du composant et également des indicateurs logiques permettant de suivre de manière irréversible les différentes étapes de vie de la carte. Pour cela, des bits au sein d'une mémoire non effaçable du composant de la carte à puce sont positionnés à l'état actif à la fin des différentes étapes de vie de la carte (fabrication et initialisation du composant par le fabricant dudit composant, encartage et initialisation de la mémoire de la carte par le fabricant de carte à puce, préparation de la structure applicative de la mémoire de la carte à puce par le centre de personnalisation ou l'émetteur de la carte...). En fonction de ces Indicateurs, le programme (ou système d'exploitation), exécuté par le microprocesseur du composant de la carte à puce, implanté au sein de l'une des mémoires dudit composant de ladite carte, adapte son comportement au fur et à mesure que les étapes de vie de ladite carte se succèdent. Ainsi, des fonctions peuvent être modifiées, ajoutées ou suppnmées.

Quelles que soient les solutions utilisées à ce jour, elles reposent toutes sur le fait que les différents acteurs impliqués dans la fabrication d'une carte sont des tiers de confiance. Seules des personnes, susceptibles d'intercepter des composants ou des cartes durant leur transfert entre deux des différents acteurs, sont supposées "fraudeurs potentiels" et les solutions exposées précédemment permettent de s'en affranchir. L'adaptation du système d'exploitation de la carte en fonction des indicateurs irréversibles apporte un plus non négligeable. Ainsi, si les fabricants de composants ou de cartes inscrivent des données systèmes ou des secrets, l'émetteur de la carte ne pourra par exemple librement s'affranchir desdits secrets ou modifier lesdites données système. Cependant, cette solution ne résout pas le problème d'une initialisation frauduleuse de la carte ou d'une erreur malencontreuse durant ladite initialisation, effectuée par l'un des acteurs.

L'invention propose de remédier aux inconvénients de l'état actuel de la technique. En particulier, l'invention consiste à doter le système d'exploitation d'une carte à puce de moyens logiciels permettant audit système d'exploitation de maîtriser un changement irréversible d'etape de vie de ladite carte en fonction d'un ensemble de vérifications du contenu des mémoires de cette même carte à puce. En outre l'invention prévoit que lors d'un changement d'étape de vie, le système d'exploitation de la carte puisse déclencher automatiquement des actions permettant d'adapter les services offerts par ledit système d'exploitation de ladite carte.

A cet effet, l'invention concerne un dispositif de contrôle du cycle de vie d'un objet électronique portatif selon la revendication 1 et un procede de contrôle selon la revendication 11.

Des modes de réalisation préferés de l'invention sont définis dans les revendications dépendantes.

En outre, l'invention concerne un objet électronique portatif, pouvant être notamment une carte a puce, comportant ledit dispositif de contrôle du cycle de vie.

L'invention sera mieux comprise à la lecture de la description qui suit et à l'examen des figures qui l'accompagnent. Celles-ci ne sont données qu'à titre indicatif et nullement limitatif de l'invention.

Les figures montrent:
- figure 1: un composant d'une carte à puce munie d'un dispositif de vérification de transition d'état;
- figures 2a et 2b: une représentation détaillée d'une table des transitions d'état;
- figure 3: une représentation détaillée d'une table des vérifications des transitions;
- figure 4: une représentation détaillée d'une table des actions;
- figure 5: une description des étapes mises en ouvre dans le procédé utilisé par le dispositif de vérification de transitions;
- figures 6a à 6d: les particularités mises en oeuvre dans le cas d'un exemple d'une carte à puce de type porte-monnaie électronique.

Dans l'invention, on appellera état de référence, un état à partir duquel il est possible de basculer vers un autre état suite au franchissement d'une transition décrite dans la table des transitions, implantée dans la mémoire de programme. Comme il est décrit plus loin, il est possible d'ajouter de nouveaux états et donc de nouvelles transitions après que l'étape de fabrication du composant ait eu lieu. Dans ce cas, on parlera d'états additifs pour caractériser ceux-ci par opposition aux états de référence. D'autre part, on appellera état courant l'état dans lequel se trouve le système embarqué.

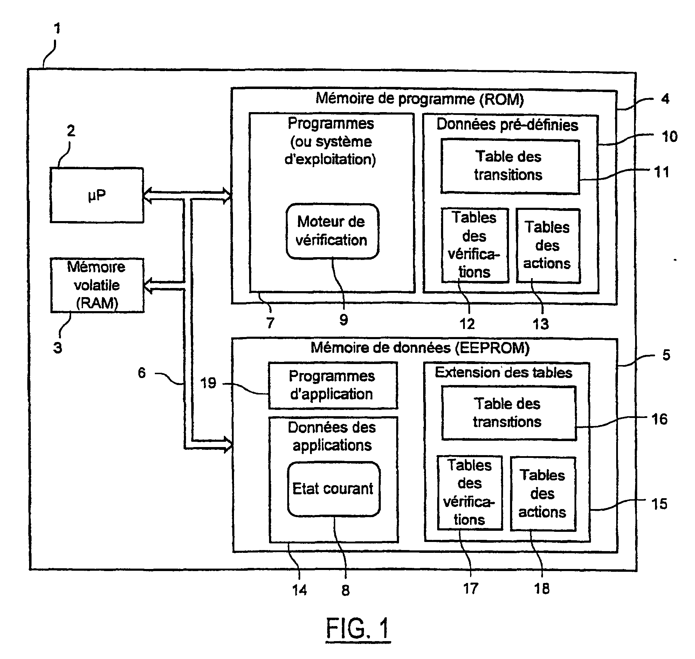

La figure 1 montre un composant 1, d'une carte à puce, muni d'un dispositif de vénfication de transitions selon l'invention. Le composant comporte une unité de traitement 2 ou encore microprocesseur en relation avec des mémoires 3, 4 et 5 via un bus de communication 6. Une mémoire de programme 4 (ou encore ROM) non effaçable comporte d'une part une zone de programmes 7, lesdits programmes (ou encore système d'exploitation du systeme embarqué) pouvant être exécutés par ladite unité de traitement et d'autre part une zone de données prédéfinies 10 qui contient des constantes utilisées par ledit système d'exploitation. Parmi lesdites constantes de la zone 10, le système d'exploitation 7, comportant un programme appelé moteur de vérification 9, exploite une table des transitions 11 qui permet de préciser les états auxquels on peut accéder à partir de l'état courant, une table des vérifications 12 qui permet d'associer à chaque transition d'état des vérifications portant sur le contenu des mémoires 3, 4 et/ou 5. Dans une variante, le moteur de vérification 9 peut déclencher automatiquement des actions lors du franchissement ou du rejet du franchissement d'une transition. Pour cela la zone 10 de la mémoire de programme comporte une table des actions 13 qui permet d'associer à chaque transition d'etat possible des actions à effectuer.

Une mémoire volatile 3 (ou encore RAM pour Random Access Memory en langue anglaise) permet à l'unité de traitement 2 de stocker de manière temporaire des résultats ou encore des secrets issus de calculs décrits par les programmes implantés dans la mémoire de programme 4. Le contenu de la mémoire 3 est effacé à chaque mise sous tension du composant 1 ou à chaque demande de remise à zéro de celui-ci.

Une mémoire de données 5, effaçable électriquement utilisant généralement la technologie EEPROM (pour Electrical Erasable Programmable Read Only Memory en langue anglaise) comporte une zone 14 contenant les données variables nécessaires à l'exécution des programmes 7. Cette zone 14 comporte notamment une donnée 8 appelée "Etat courant" permettant de mémoriser l'état courant de l'objet électronique portatif. La mémoire de données 5 comporte en outre une zone 15 comprenant optionnellement des extensions des tables 11 à 13 dans le cas où il est nécessaire d'ajouter des états aux états de références. La zone 15 comporte alors une extension de la table des transitions 16, une extension de la table des vérifications 17 et peut comporter une extension de la table des actions 18 si l'on souhaite associer aux nouvelles transitions d'état additif des actions, comme vu précédemment pour ce qui concerne la table 13. Dans le cas d'ajout d'états par rapport aux états de référence, il est parfois indispensable d'enrichir le système d'exploitation 7. Pour cela, la mémoire 5 peut comporter en outre une zone 19 qui contient les programmes supplémentaires qui seront exécutés à leur tour par l'unité de traitement 2.

La figure 2a montre une mise en oeuvre possible de la table des transitions 11. Si l'on suppose que l'on dénombre i états de référence, on peut imaginer une table de transition comprenant i colonnes et i lignes Les colonnes correspondent aux états de référence pouvant être, à un instant donné, l'état courant. Les i premières lignes correspondent aux états de référence auxquels on peut accéder à partir de l'état courant. Ainsi la valeur d'une case de la table des transitions 11 correspondant à l'intersection d'une ligne et d'une colonne de ladite table permet de coder soit, l'absence de transition autorisée (valeur nulle par exemple - c'est le cas de la transition 20), soit, l'autorisation une transition (valeur non nulle - c'est le cas de la transition 21). Dans le cas d'une transition autorisée, le moteur de vérification de transitions recherche au sein de la table de vérification 12 les vérifications à effectuer pour accepter ou rejeter le franchissement de la transition demandée.

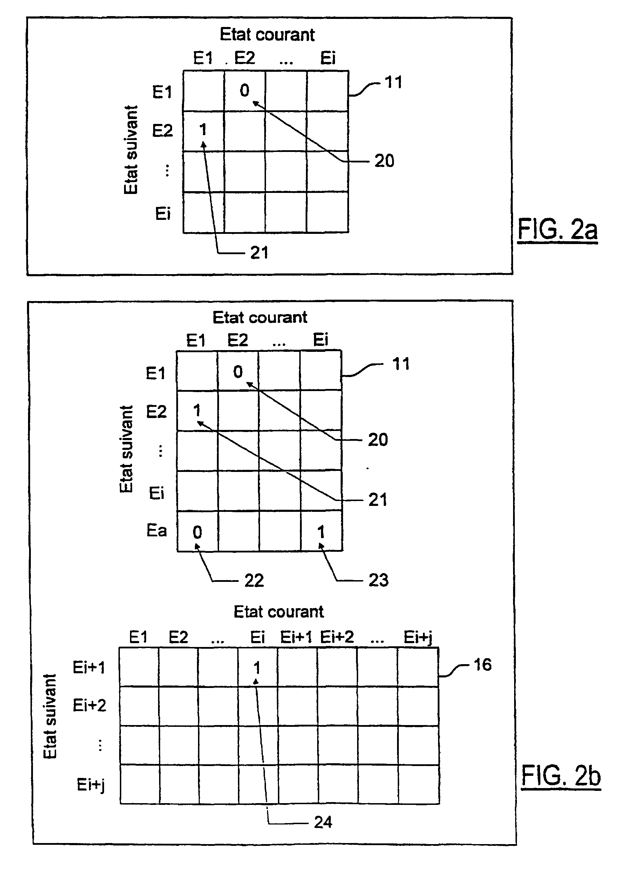

La figure 2b montre également une mise en oeuvre possible d'une table de transition dans le cas où il est possible d'ajouter des états (états additifs) aux états de référence. La table des transitions comporte une ligne supplémentaire par rapport à la figure 2a. La (i+1 )ème ligne permet de préciser si l'on autorise des transitions d'un état de référence courant à un état additif. Ainsi la valeur de la case 22 indique une transition interdite d'un état de référence vers un état additif. La case 23 indique qu'il sera possible de basculer de l'état de référence Ei vers un état additif. Une extension 16 de la table des transitions est alors nécessaire Cette dernière comporte j lignes correspondant à j états additifs auxquels on peut accéder à partir de (i+j) états courant possibles matérialisés par les (i+j) colonnes de l'extension 16 de latable des transitions. Ainsi la combinaison de la case 23 de la table des transitions et de la case 24 de l'extension 16 de la table des transitions, indique au moteur de vérification qu'il est possible de basculer de l'état de référence Ei vers l'état additif E (i+1).

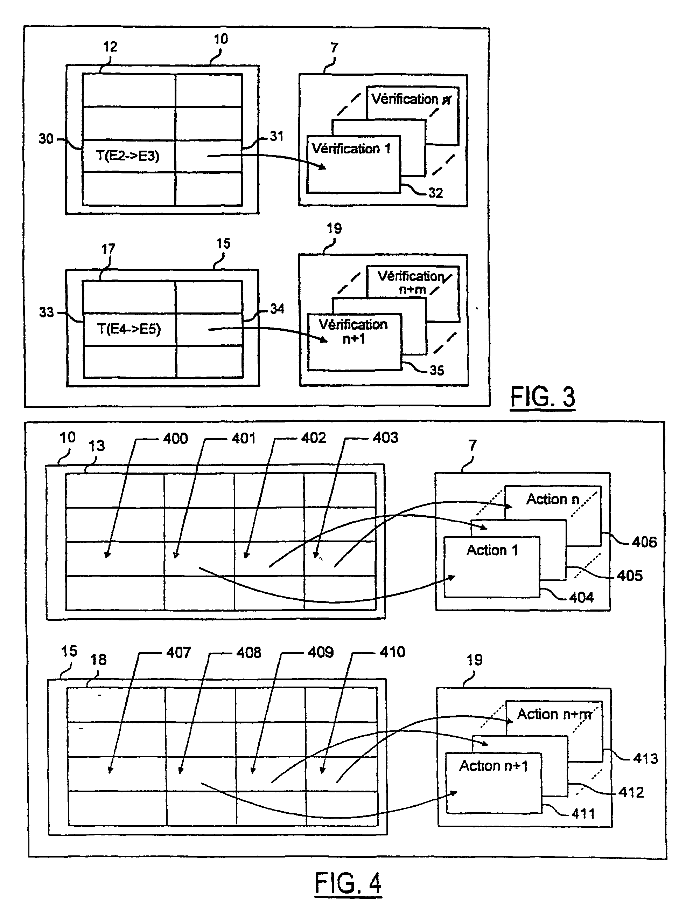

La figure 3 montre une mise en oeuvre de la table des vénfications La table des vérifications 12 est implantée au sein de la zone 10 des données prédéfinies de la mémoire 4. Chaque transition autorisée dispose d'une entrée dans ladite table. Une entrée comprend un champ 30 permettant d'identifier la transition et un champ 31 contenant une référence (ou adresse) vers un programme 32 du système d'exploitation 7. Le moteur de vérification 9 peut ainsi faire exécuter à l'unité de traitement 2 les contrôles requis pour accepter le franchissement de la transition. La figure 3 illustre également une structure d'une extension 17 de la table des vérifications. De la même manière que pour la table 12, l'extension de la table des vérifications 17 comporte une entrée par transition possible. Chaque entrée comprend deux champs, un champ 33 permettant d'identifier la transition et un champ 34 contenant une référence (ou adresse) d'un programme 35 du système d'exploitation ou, comme le montre la figure 3, d'un programme supplémentaire implanté dans la mémoire de données 5 (en zone 19).

La figure 4 montre une représentation de la table des actions 13 implantée dans la zone 10 des données prédéfinies de la mémoire de programmes 4. Lors d'une demande de franchissement de transition, il est possible de déclencher des actions. Celles-ci peuvent être de trois types: action systématique, action positive (c'est à dire conditionnée au fait que les vérifications sont satisfaisantes) ou action négative (c'est à dire conditionnée au fait que les vérifications ne sont pas satisfaisantes). La figure 4 montre qu'à chaque transition autorisée, il existe une entrée dans la table des actions 13 Cette entrée comprend 4 champs. Le premier champ 400 permet d'identifier la transition. Les trois autres champs 401, 402 et 403 contiennent chacun une référence ou adresse d'un programme 404, 405 ou 406 du système d'exploitation. Le champ 401 est dédié à une action systématique, le champ 402 à une action positive et le champ 403 à une action négative. La figure 4 montre également une extension 18 de la table des actions. Cette table 18 est implantée dans la zone 15 de la mémoire de données 5 du composant 1. De la même manière que pour la table des actions 13, l'extension de la table des actions 18 comprend une entrée par transition possible. Une entrée comprend 4 champs. Le premier champ 407 permet d'identifier la transition. Les trois autres champs 408, 409 et 410 contiennent chacun une référence ou adresse d'un programme 411, 412 ou 413 du système d'exploitation ou comme le montre la figure 4, des programmes implantés dans la zone 19 de la mémoire de données 5 du composant 1. Le champ 408 est dédié à une action systématique, le champ 409 à une action positive et le champ 410 à une action négative.

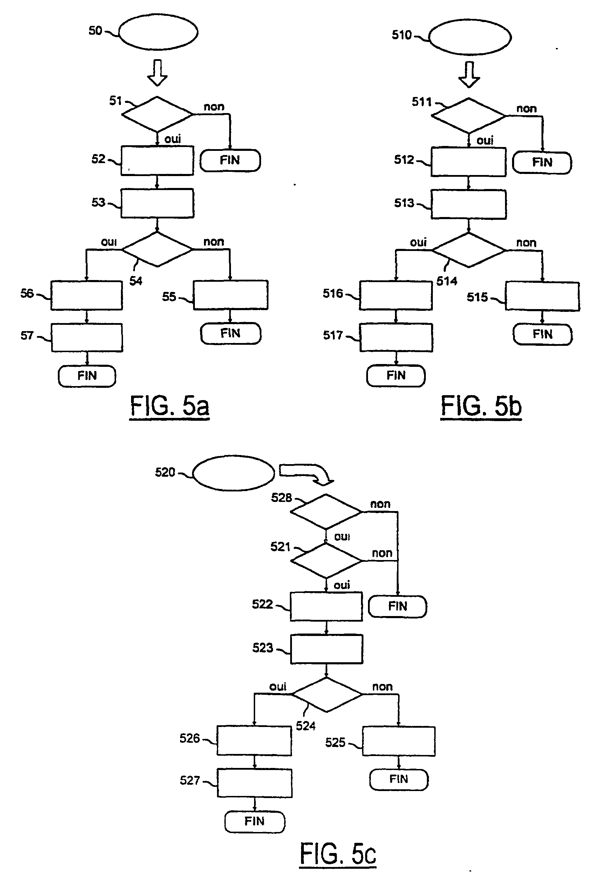

La figure 5a décrit le procédé permettant de valider ou de rejeter le franchissement d'une transition d'état, d'un premier état de référence vers un autre état de référence. La demande de franchissement d'une transition peut être formulée suite à un ordre du fabricant de carte ou partout autre acteur du cycle de vie de la carte à puce. Ladite demande peut également être formulée directement par la carte-elle même, par exemple au travers d'une action associée à une transition. Dans le cadre de la figure 5a, l'état de référence courant est l'état Ei. L'ordre 50 de basculement de l'état Ei à l'état Ej est formulé. L'étape 51 consiste à vérifier au sein de la table des transitions 11 que la transition de l'état Ei vers l'état Ej est autorisée. Dans le cas où cette transition est interdite, la demande de franchissement de transition 50 est rejetée. L'état courant demeure l'état Ei. Par contre, si la transition est autorisée, le moteur de vérification 9 exécute les vérifications associées à ladite transition. Pour cela le moteur de vérification évalue l'entrée de la table des vérifications 12 dédiée à la transition T(Ei→Ej). L'exécution desdites vérifications correspond à l'étape 52 du procédé. Le moteur de vérification 9 exécute les actions systématiques associées à la transition T(Ei→Ej) en fonction de l'entrée de la table des actions 13 dédiées à ladite transition (étape 53). Si les vérifications 54 exigées lors de la demande de franchissement de la transition 50 sont non satisfaisantes, l'état courant demeure inchangé. En fonction de l'entrée de la table des actions 13 associée à la transition T(Ei →Ej) le moteur de vérifications exécute les actions négatives (étape 55 du procédé). Le déroulement du procédé est alors terminé. Par contre, si les vérifications 54 sont satisfaisantes, alors l'état courant devient l'état Ej (étape 56 du procédé). Les actions positives sont alors exécutées (étape 57 du procédé) en fonction de l'état de l'entrée de la table des actions 13 associée à la transition T(Ei→Ej). Le déroulement du procédé est terminé.

La figure 5b décrit le procédé permettant de valider ou de rejeter le franchissement d'une transition d'état, d'un premier état additif vers un autre état additif. L'état additif courant est l'état Ei. L'ordre 510 de basculer de l'état additif Ei à l'état additif (ou de référence) Ej est formulé. L'étape 511 du procédé consiste à vérifier au sein de l'extension la table des transitions 16 que la transition de l'état Ei à l'état Ej est autorisée. Dans le cas où cette transition est interdite, la demande de franchissement de transition 510 est rejetée. L'état courant demeure l'état Ei. Par contre, si la transition est autorisée, le moteur de vérification 9 exécute les vérifications associées à ladite transition. Pour cela, le moteur de vénfication évalue l'entrée de l'extension de la table des vérifications 17 dédiée à la transition T(Ei→Ej). L'exécution desdites vérifications constitue l'étape 512 du procédé. Le moteur de vérification 9 exécute les actions systématiques associées à la transition T(Ei→Ej) en fonction de l'entrée de l'extension de la table des actions 18 dédiées à ladite transition (étape 513 du procédé). Si la vérification 514 exigée lors de la demande de franchissement de la transition 510 est non satisfaisante, l'état courant demeure inchangé. En fonction de l'entrée de l'extension de la table des actions 18 associée à la transition T(Ei→Ej), le moteur de vérification 9 exécute les actions négatives (étape 515 du procédé). Le déroulement du procédé est alors terminé. Par contre, si les vérifications 514 sont satisfaisantes, l'état courant devient l'état Ej (étape 516 du procédé). Les actions positives sont alors exécutées (étape 517 du procédé) en fonction de l'état de l'entrée de l'extension de la table des actions 18 associée à la transition T(Ei→Ej). Le déroulement du procédé est terminé.

La figure 5c décrit le procédé permettant de valider ou de rejeter le franchissement d'une transition d'état, d'un état de référence vers un état additif. L'état de référence courant est l'état Ei. L'ordre 520 de basculement de l'état de référence Ei à l'état additif Ej est formulé. L'étape 528 du procédé consiste à vérifier au sein de la table des transitions 11, qu'une transition de l'état de référence courant Ei vers un état additif est autorisée. Si une telle transition est interdite, le procédé est terminé. L'état courant demeure inchangé. Par contre, si une transition dudit état de référence vers un état additif est autorisée, le moteur de vérification déroule les étapes 521 à 527 du procédé, respectivement identiques aux étapes 511 à 517 décrites en liaison avec la figure 5b.

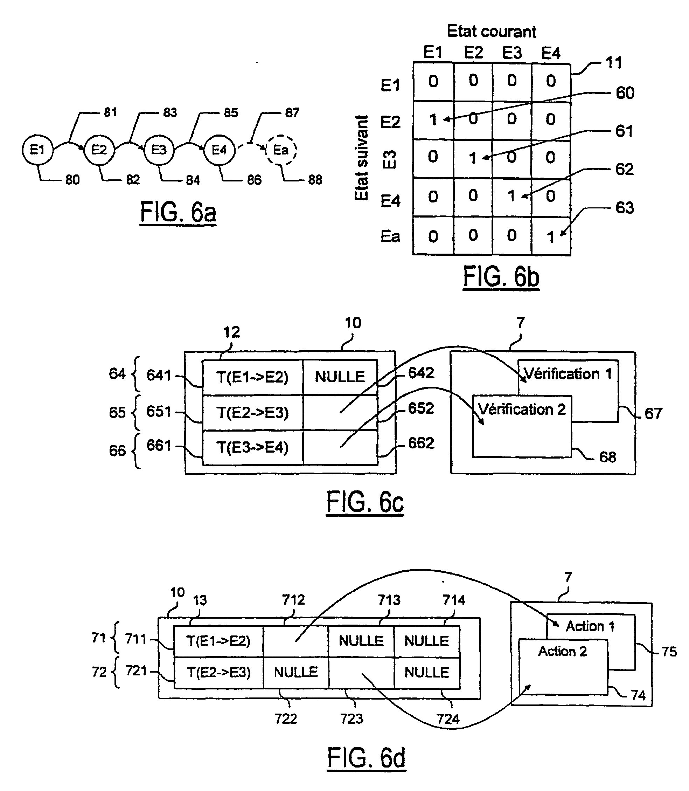

Un exemple d'application dans le domaine du Porte-monnaie électronique est présenté en liaison avec les figures 6a à 6d. Ladite application permet de régler des achats à l'aide "d'argent électronique" stocké dans une carte à puce, au lieu de payer en numéraire. L'emploi d'une telle technique impose une gestion des cartes aussi sécurisée que celle qu'aurait imposé l'emploi du numéraire. Il faut par exemple éviter la création de monnaie fictive. La sécunté d'une carte à puce porte-monnaie électronique repose généralement sur des clés stockées à l'intérieur de ladite carte à puce permettant des transactions sécunsées en utilisant la cryptographie. Une telle carte dispose d'un système d'exploitation offrant un jeu de commandes et de services permettant de créditer ou de débiter de l'argent. Au début du cycle de vie de la carte à puce porte-monnaie électronique, ladite carte à puce n'est pas initialisée. Elle ne contient aucune information. La figure 6a montre les états de référence prédéfinis :
- Etat E1 "carte vierge" (référencé 80): seules des commandes de test permettant de valider le comportement de la mémoire de données 5 sont disponibles (vérification que les cases mémoires de technologie EEPROM peuvent être correctement écrites et effacées);
- Etat E2 "carte testée" (référencé 82): Les commandes de test ne sont plus disponibles. A leur tour des commandes dites généralement "commandes physiques" (permettant un accès en écriture par un adressage physique indépendamment de toute structure logique de type fichier par exemple) sont disponibles. Elles permettent d'initialiser la carte (écriture dans la zone 14 de la mémoire de données des constituants logiques nécessaires au fonctionnement de l'application c'est à dire fichiers, balances...);
- Etat E3 "carte initialisée" (référencé 84): les commandes physiques ne sont plus disponibles. Des commandes logiques permettent de personnaliser la carte (ajout de nouvelles structures logiques et initialisation de données dans lesdites structures) sont utilisables. En outre, un mécanisme de recouvrement est activé de sorte que la carte à puce ne perde pas la cohérence de ces données lors d'une mise hors tension de celle-ci durant l'exécution de l'une desdites commandes logiques.
- Etat E4 "carte personnalisée" (référencé 86) les commandes logiques spécifiques à l'application Porte-monnaie électronique (débit/crédit) sont activées.

Le jeu de commandes disponibles évolue en fonction de l'étape de vie dans laquelle se trouve la carte à puce. Des informations stockées en mémoire de données permettent au système d'exploitation de connaître l'état dans lequel la carte à puce se trouve. La figure 6a montre en outre que dans le cadre d'une carte de type porte-monnaie électronique, toutes les transitions entre états de référence doivent être franchies successivement (de l'état E1 à l'état E4) et ce de manière irréversible. Toute autre transition est interdite. Seule la possibilité d'utiliser ultérieurement des états additifs 88 est offerte. Cette transition possible est référencée 87. Le système d'exploitation en fonction de l'état courant n'autorise qu'un ensemble de commandes spécifiques à chaque état de référence.

Les vérifications et les actions à déclencher lors du franchissement d'une transition sont décrites comme suit:
- Transition de l'état E1 vers l'état E2 (notée T (E1→E2) et référencée 81):

- Vérification: aucune
- Action systématique:
   effacement de la mémoire de données pour éviter qu'un fraudeur y laisse des données terprétables par le système d'exploitation de la carte;
- Transition de l'état E2 vers l'état E3 (notée T (E2→E3) et référencée 83) :
   - Vérification
      - intégrité des données écrites dans la mémoire de données avec les commandes physiques (validation d'un code de redondance par donnée);
      - vérification de l'état vierge de la mémoire en dehors desdites données;
   - Action positive :
      - activation du mécanisme de recouvrement;
- Transition de l'état E3 vers l'état E4 (notée T (E3→E4) et référencée 85) :
   - Vérification:
      - nullité de la balance du porte monnaie électronique
   - Action : aucune
- Transition de l'état E4 vers un état additif (notée T (E4→Eadd) et référencée 87) :
   - Vérification : aucune
   - Action : aucune

Les figures 6b à 6d illustrent respectivement une réalisation d'une table des transitions 11, d'une table des vérifications 12 et d'une table d'actions 13, selon l'invention. La table des transitions 11 telle que décrite en liaison avec la figure 6b permet de n'autoriser que les transitions 81, 83, 85 et 87. Pour cela seules les cases 60 à 63 de ladite table contiennent une valeur non nulle. Les autres cases de la table des transitions contiennent une valeur nulle pour indiquer que toute autre transition est interdite. La table des vérifications telle que présentée au travers de la figure 6c, permet d'associer les vérifications à satisfaire pour autoriser le franchissement des transitions 81, 83, 85 et 87, lesdites transitions autorisées par la table des transitions 11 (figure 6b). Ainsi l'entrée 64 de la table des vérifications 12 comporte un champ 641 permettant d'identifier que ladite entrée est dédiée à la transition 81. L'entrée 64 comporte en outre un champ 642 contenant une référence nulle pour indiquer qu'aucune vérification n'est demandée pour autoriser le franchissement de la transition 81. Dans une variante, la transition 81 ne dispose d'aucune entrée associée. Cette variante est illustrée plus loin dans le cas de la table des actions. La table des vérifications 12 comporte une entrée 65 qui comprend respectivement un champ 651 pour indiquer que l'entrée est associée à la transition 83 et un champ 652 contenant la référence d'un programme 67, implanté dans la mémoire de programmes, pour que le moteur de vérification puisse effectuer les vérifications décrites précédemment. De même, la table des vérifications 12 comporte une entrée 66 qui comprend respectivement un champ 661 pour indiquer que l'entrée est associée à la transition 83 et un champ 662 contenant la référence d'un programme 68, implanté dans la mémoire de programmes, pour que le moteur de vérification puisse effectuer les vérifications décrites précédemment.

La figure 6d présente une réalisation de la table des actions 13. Ladite table comporte une entrée 71 qui comporte un champ 711 permettant d'indiquer que ladite entrée est associée à la transition 81. La même entrée 71 comporte un champ 712 contenant la référence d'un programme 75, implanté dans la mémoire de programmes, afin que le moteur de vérification puisse exécuter les actions systématiques associées à la transition 81. L'entrée 71 comporte en outre un champ 713 et un champ 714 contenant une référence nulle pour indiquer au moteur de vérification qu'aucune action positive ni négative n'est associée au franchissement de la transition 81. De la même manière, la table des actions 13 comporte une seconde entrée 72 comprenant les champs 721 à 724 pour indiquer au moteur de vérification que ladite entrée est associée à la transition 83, que le programme 74 est à exécuter comme action positive lors du franchissement de ladite transition et qu'aucune action systématique ou négative n'est à exécuter. L'absence d'entrée, au sein de la table des actions 13, associée à la transition 85, indique qu'aucune action (systhématique, positive ou négative) n'est à exécuter lors du franchissement ou du rejet du franchissement de ladite transition.

Grâce au dispositif et au procédé tels que décrits ci-dessus, le cycle de vie d'un objet électronique portatif est maitrisé. Chaque transition d'états est irréversible et les vérifications faites lors de chaque demande de transitions garantissent une configuration mémoire de l'objet cohérente En outre les actions systématiques, positives ou négatives permettent d'adapter le comportement dudit objet. Enfin, dans le cas où il est prévu d'autoriser une ou plusieurs transitions d'un ou plusieurs états de référence vers un état additif, le cycle de vie de l'objet peut être facilement enrichi, par exemple après que l'objet soit émis sur le marché, sans que le cycle de vie prédéfinl (compose par une succession de transitions d'état de référence vers un autre état de référence) puisse être détourné.

Tout risque de fraude durant l'initialisation d'un objet électronique portatif ou d'erreur malencontreuse durant ladite initialisation est écarté tout en conservant grande adaptabilité du contrôle du cycle de vie de l'objet.

## Revendications

1. Dispositif de contrôle du cycle de vie d'un objet électronique portatif, le cycle de vie étant déterminé par une succession de transitions d'états, lesdits états déterminant les services offerts par l'objet, ledit objet comprenant une unité de traitement (2), une mémoire volatile (3), des mémoires de programmes (4) et des mémoires de données (5), chacune de ces mémoires (3, 4, 5) présentant un contenu définissant une pluralité de configurations,
**caractérisé en ce que** le dispositif comporte des moyens de contrôle de la transition d'un premier état à un second état de l'objet électronique portatif, exploitant des moyens d'autorisation et/ou interdiction de transitions d'état, autorisent et/ou interdisent une transition d'états en exploitant une table (11) des transitions d'états permises de sorte que seules certaines transitions ne soient permises parmi l'ensemble des transitions possibles.

2. Dispositif selon la revendication 1, **caractérisé en ce que** les moyens de contrôle comprennent des moyens de vérification du contenu de la mémoire volatile (3), des mémoires de données (5) et des mémoires de programmes (4) de l'objet électronique portatif, en fonction de la transition d'états permise à effectuer.

3. Dispositif selon la revendication 1 ou 2, **caractérisé en ce que** les moyens de contrôle comprennent:
- outre la table (11) des transitions d'état permises;
- une table (12) des vérifications à effectuer par transition d'état permise;
- et un moteur de vérification (9) exploitant lesdites tables.

4. Dispositif selon l'une quelconque des revendications 1 à 2 **caractérisé en ce que** les moyens de contrôle de la transition d'un premier état à un second état de l'objet électronique portatif comprennent:
- une extension (16) de la table (11) des transitions d'état permises;

5. Dispositif selon la revendication 3, **caractérisé en ce que** les moyens de contrôle de la transition d'un premier état à un second état de l'objet électronique portatif comprennent:
- une extension (16) de la table (11) des transitions d'état permises;
- une extension (17) de la table (12) des vérifications à effectuer par transition d'état permise;
**et en ce que** le moteur de vérification (9) exploite lesdites extensions de tables (16, 17).

6. Dispositif selon l'une quelconque des revendications 1 à 5, **caractérisé en ce que** les moyens de contrôle comprennent des moyens permettant de déclencher des actions lors du traitement d'une demande de franchissement de transition d'un premier état à un second état de l'objet électronique portatif.

7. Dispositif selon la revendication 6 lorsque celle-ci dépend des revendications 4 ou 5, **caractérisé en ce que** les moyens permettant de déclencher des actions lors du traitement d'une demande de franchissement de transition d'un premier état à un second état de l'objet électronique portatif, comprennent une table (13) d'actions exploitable par le moteur de vérification (9).

8. Dispositif selon la revendication 7, **caractérisé en ce que** les moyens permettant de déclencher des actions lors du traitement d'une demande de franchissement de transition d'un premier état à un second état de l'objet électronique portatif, comprennent une extension (18) de la table (13) d'actions exploitable par le moteur de vérification (9).

9. Objet électronique portatif, comportant une unité de traitement (2), une mémoire volatile (3), des mémoires de programmes (4) et des mémoires de données (5), **caractérisé en ce qu'**il comporte le dispositif de contrôle du cycle de vie de l'objet, selon l'une des revendications 1 à 8.

10. Carte à puce, comportant une unité de traitement (2), une mémoire volatile (3), des mémoires de programmes (4) et des mémoires de données (5), **caractérisé en ce qu'**elle comporte le dispositif de contrôle du cycle de vie de la carte, selon l'une des revendications 1 à 8.

11. Procédé de contrôle du cycle de vie d'un objet électronique portatif, le cycle de vie étant déterminé par une succession de transitions d'états, lesdits états déterminant les services offerts par l'objet, ledit objet comprenant une unité de traitement (2), une mémoire volatile (3), des mémoires de programmes (4) et des mémoires de données (5), chacune de ces mémoires (3, 4, 5) présentant un contenu définissant une pluralité de configurations,
ledit procede étant mis en oeuvre, au sein de l'objet, à la suite d'une demande de transition d'etats,
**caractérisé en qu'**il comprend :
- une étape (51, 511, 528, 521) de validation de l'autorisation de ladite demande en exploitant des moyens d'autorisation et/ou interdiction de transitions d'état, de sorte que seules certaines transitions ne soient permises parmi l'ensemble des transitions possibles ladite étape, consistant à analyser une table (11) des transitions permises;
- une étape (56, 516, 526) de modification de l'état courant de l'objet si la transition demandée est autorisée (51, 511, 528, 521).

12. Procédé selon la revendication 11, **caractérisé en ce qu'**il comprend une étape (53, 513, 523) d'exécution d'actions systématiques, actions associées à la transition demandée:

13. Procédé selon l'une quelconque des revendications 11 ou 12, **caractérisé en ce qu'**il comprend :
- une étape (52, 512, 522) d'évaluation des vérifications de la configuration de l'objet, vérifications associées à une transition permise;
- et **en ce que** l'étape (56, 516, 526) de modification de l'état courant de l'objet, est réalisée si lesdites vérifications de la configuration de l'objet sont satisfaites (54, 514, 524).

14. Procédé selon la revendication 13, **caractérisé en ce qu'**il comprend une étape (57, 517, 527) d'exécution d'actions positives, réalisée si la transition demandée est permise (51, 511, 528, 521), et si les vérifications associées à la transition demandée sont satisfaites (54, 514, 524).

15. Procédé selon l'une quelconque des revendications 13 ou 14 **caractérisé en ce qu'**il comprend une étape (55, 515, 525) d'exécution d'actions négatives si les vérifications associées à la transition demandée ne sont pas satisfaites (54, 514, 524).

16. Procédé selon l'une quelconque des revendications 11 à 12, **caractérisé en ce qu'**il comprend une étape (57, 517, 527) d'exécution d'actions positives réalisée si la transition demandée est permise (51, 511, 528, 521).

17. Procédé selon la revendication 12, **caractérisé en ce que** l'etape (53) d'exécution d'actions systématiques consiste :
- à exploiter une entrée (400, 401 ), correspondant à la transition demandée, d'une table (13) d'actions et ;
- à exécuter un programme d'actions (404) défini par ladite entrée.

18. Procédé selon l'une quelconque des revendications 13 à 15, **caractérisé en ce que** l'étape (52) d'évaluation des vérifications associées à la transition demandée, consiste :
- à exploiter une entrée (30) d'une table (12) des vénfications et ;
- à exécuter un programme (32) de vérifications défini par ladite entrée.

19. Procédé selon la revendication 14, **caractérisé en ce que** l'étape (56) d'exécution d'actions positives consiste, si la transition demandée est autorisée (51) et si les vérifications associées à la transition demandée sont satisfaites (54) :
- à exploiter une entrée (400, 402), correspondant à la transition demandée, d'une table (13) d'actions et ;
- à exécuter un programme (405) d'actions défini par ladite entrée.

20. Procedé selon la revendication 15, **caractérisé en ce que** l'étape (55) d'exécution d'actions négatives consiste, si les vérifications associées à la transition demandée ne sont pas satisfaites (54) :
- à exploiter une entrée (400, 403), correspondant à la transition demandée, de la table (13) d'actions et ;
- à exécuter un programme (406) d'actions défini par ladite entrée.

21. Procédé selon la revendication 16, **caractérisé en ce que** l'étape (56) d'exécution d'actions positives consiste, si la transition demandée est autorisée (51):
- à exploiter une entrée (400, 402), correspondant à la transition demandée, d'une table (13) d'actions et ;
- a exécuter un programme (405) d'actions défini par ladite entrée.

22. Procedé selon l'une quelconque des revendications 11 à 16, mis en oeuvre au sein de l'objet, a la suite d'une demande de transition d'un premier état additif vers un second état additif, **caractérisé en que** l'étape (511) de validation de l'autorisation de ladite demande consiste à analyser une extension (16) de la table (11) des transitions permises.

23. Procédé selon la revendication 22, lorsque celle-ci dépend de la revendication 12, **caractérisé en ce que** l'étape (513) d'exécution d'actions systématiques consiste :
- à exploiter une entrée (407, 408), correspondant à la transition demandée, d'une extension (18) d'une table (13) d'actions et ;
- à exécuter un programme d'actions (411) défini par ladite entrée.

24. Procédé selon l'une quelconque des revendications 22 ou 23, lorsque la revendication 22 depend des revendications 13 à 15, **caractérisé en ce que** l'étape (512) d'évaluation des vérifications associées à la transition demandée consiste :
- à exploiter une entrée (33) d'une extension (17) d'une table (12) des vérifications et ;
- à exécuter un programme (35) de vérifications défini par ladite entrée.

25. Procédé selon l'une quelconque des revendications 22 à 24, lorsque la revendication 22 dépend de la revendication 14, **caractérisé en ce que** l'étape (516) d'exécution d'actions positives consiste, si la transition demandée est autorisée (511) et si les vérifications associées à la transition demandée sont satisfaites (514) :
- à exploiter une entrée (407, 409), correspondant à la transition demandée, d'une extension (18) d'une table (13) d'actions et ;
- à exécuter un programme d'actions (412) défini par ladite entrée.

26. Procédé selon l'une quelconque des revendications 22 à 25, lorsque la revendication 22 dépend de la revendication 15, **caractérisé en ce que** l'étape (515) d'exécution d'actions négatives consiste, si les vérifications associées à la transition demandée ne sont pas satisfaites (514) :
- à exploiter une entrée (407, 410), correspondant à la transition demandée, d'une extension (18) d'une table (13) d'actions et ;
- à exécuter un programme d'actions (413) défini par ladite entrée.

27. Procedé selon l'une quelconque des revendications 22 à 23 lorsque la revendication 22 depend de la revendication 16 **caractérisé en ce que** l'étape (516) d'exécution d'actions positives consiste, si la transition demandée est autonsee (511) :
- à exploiter une entrée (407, 409), correspondant à la transition demandée, d'une extension (18) d'une table (13) d'actions et ;
- à exécuter un programme d'actions (412) défini par ladite entrée.

28. Procédé selon l'une quelconque des revendications 11 à 16, mis en oeuvre au sein de l'objet, à la suite d'une demande de transition d'un état de référence vers un état additif, **caractérisé en que** l'étape (528, 521) de validation de l'autorisation de ladite demande consiste à :
- valider (528) l'autorisation d'une transition dudit état de référence vers un état additif en analysant la table (11) des transitions permises;
- valider (521) l'autorisation d'une transition dudit état de référence vers ledit état additif en analysant une extension (16) de la table (11) des transitions permises.

29. Procédé selon la revendication 28, lorsque celle-ci dépend de la revendications 12, **caractérisé en ce que** l'étape (513) d'exécution d'actions systématiques consiste :
- à exploiter une entrée (407, 408), correspondant à la transition demandée, d'une extension (18) d'une table (13) d'actions et ;
- à exécuter un programme d'actions (411) défini par ladite entrée.

30. Procédé selon l'une quelconque des revendications 28 ou 29, lorsque la revendication 28 dépend des revendications 13 à 15 **caractérisé en ce que** l'étape (522) d'evaluation des verifications associées à la transition demandée consiste :
- à exploiter une entrée (33) d'une extension (17) d'une table (12) des vérifications et ;
- à exécuter un programme (35) de vérifications défini par ladite entrée.

31. Procédé selon l'une quelconque des revendications 28 à 30, lorsque la revendication 28 dépend de la revendication 14 **caractérisé en ce que** l'étape (526) d'exécution d'actions positives consiste, si la transition demandée est autorisée (528, 521) et si les vérifications associées à la transition demandée sont satisfaites (524) :
- a exploiter une entrée (407, 409), correspondant a la transition demandée, d'une extension (18) d'une table (13) d'actions et ;
- a exécuter un programme d'actions (412) defini par ladite entrée.

32. Procédé selon l'une quelconque des revendications 28 à 30, lorsque la revendication 28 dépend de la revendication 15 **caractérisé en ce que** l'étape (525) d'exécution d'actions négatives consiste, si les vérifications associées à la transition demandée ne sont pas satisfaites (524) :
- à exploiter une entrée (407, 410), correspondant à la transition demandée, d'une extension (18) d'une table (13) d'actions et ;
- à exécuter un programme d'actions (413) défini par ladite entrée.

33. Procédé selon l'une quelconque des revendications 28 à 29, lorsque la revendication 28 dépend de la revendication 16 **caractérisé en ce que** l'étape (526) d'exécution d'actions positives consiste si la transition demandée est autorisée (528, 521) :
- à exploiter une entrée (407, 409), correspondant à la transition demandée, d'une extension (18) d'une table (13) d'actions et ;
- à exécuter un programme d'actions (412) défini par ladite entrée.

34. Procédé selon l'une quelconque des revendications 11 à 33, **caractérisé en ce que** ledit procédé n'autorise pas le franchissement d'une transition d'état, d'un état additif vers un état de référence.

## Patentansprüche

1. Kontrollvorrichtung des Lebenszyklus eines tragbaren elektronischen Objekts, wobei der Lebenszyklus durch eine Folge von Übergängen von einem Zustand zum anderen bestimmt wird, wobei die besagten Zustände die vom Objekt angebotenen Dienste bestimmen, wobei das besagte Objekt eine Verarbeitungseinheit (2), einen flüchtigen Speicher (3), Programmspeicher (4) und Datenspeicher (5) umfasst, wobei jeder dieser Speicher (3, 4, 5) einen eine Vielzahl von Konfigurationen definierenden Inhalt aufweist,
**dadurch gekennzeichnet, dass** die Vorrichtung Kontrollmittel des Übergangs von einem ersten Zustand in einen zweiten Zustand des tragbaren elektronischen Objekts umfasst, die Zulassungs- und/oder Untersagungsmittel von Zustandsübergängen nutzen, die einen Zustandsübergang durch Nutzung einer Zustandsübergangstabelle (11) zulassen und/oder untersagen, so dass nur bestimmte Übergänge von allen möglichen Übergängen erlaubt sind.

2. Vorrichtung gemäß Anspruch 1, **dadurch gekennzeichnet, dass** die Kontrollmittel je nach erlaubtem Zustandsübergang Prüfmittel des Inhalts des flüchtigen Speichers (3), der Datenspeicher (5) und der Programmspeicher (4) des tragbaren elektronischen Objekts umfassen.

3. Vorrichtung gemäß Anspruch 1 oder 2, **dadurch gekennzeichnet, dass** die Kontrollmittel umfassen:
- außer der Tabelle (11) der erlaubten Zustandsübergänge,
- eine Tabelle (12) der für jeden erlaubten Zustandsübergang durchzuführenden Prüfungen,
- einen die besagten Tabellen nutzenden Prüfmotor (9) .

4. Vorrichtung gemäß einem der Ansprüche 1 bis 2, **dadurch gekennzeichnet, dass** die Kontrollmittel des Übergangs von einem ersten Zustand in einen zweiten Zustand des tragbaren elektronischen Objekts umfassen:
- eine Erweiterung (16) der Tabelle (11) der erlaubten Zustandsübergänge.

5. Vorrichtung gemäß Anspruch 3, **dadurch gekennzeichnet, dass** die Kontrollmittel des Übergangs von einem ersten Zustand in einen zweiten Zustand des tragbaren elektronischen Objekts umfassen:
- eine Erweiterung (16) der Tabelle (11) der erlaubten Zustandsübergänge;
- eine Erweiterung (17) der Tabelle (12) der für jeden erlaubten Zustandsübergang durchzuführenden Prüfungen;
und dass der Prüfmotor (9) die besagten Tabellenerweiterungen (16, 17) nutzt.

6. Vorrichtung gemäß einem der Ansprüche 1 bis 5, **dadurch gekennzeichnet, dass** die Kontrollmittel Mittel umfassen, die bei der Verarbeitung eines Übergangsfreigabewunsches von einem ersten Zustand in einen zweiten Zustand des tragbaren elektronischen Objekts das Auslösen von Aktionen ermöglichen.

7. Vorrichtung gemäß Anspruch 6, wenn dieser von den Ansprüchen 4 oder 5 abhängig ist, **dadurch gekennzeichnet, dass** die Mittel, die bei der Verarbeitung eines Übergangsfreigabewunsches von einem ersten Zustand in einen zweiten Zustand des tragbaren elektronischen Objekts das Auslösen von Aktionen ermöglichen, eine Tabelle (13) mit von dem Prüfmotor (9) nutzbaren Aktionen umfassen.

8. Vorrichtung gemäß Anspruch 7, **dadurch gekennzeichnet, dass** die Mittel, die bei der Verarbeitung eines Übergangsfreigabewunsches von einem ersten Zustand in einen zweiten Zustand des tragbaren elektronischen Objekts das Auslösen von Aktionen ermöglichen, eine Erweiterung (18) der Tabelle (13) der von dem Prüfmotor (9) nutzbaren Aktionen umfassen.

9. Tragbares elektronisches Objekt mit einer Verarbeitungseinheit (2), einem flüchtigen Speicher (3), Programmspeichern (4) und Datenspeichern (5), **dadurch gekennzeichnet, dass** es die Kontrollvorrichtung des Lebenszyklus des Objekts gemäß einem der Ansprüche 1 bis 8 umfasst.

10. Chipkarte mit einer Verarbeitungseinheit (2), einem flüchtigen Speicher (3), Programmspeichern (4) und Datenspeichern (5), **dadurch gekennzeichnet, dass** sie die Kontrollvorrichtung des Lebenszyklus der Karte gemäß einem der Ansprüche 1 bis 8 umfasst.

11. Kontrollverfahren des Lebenszyklus eines tragbaren elektronischen Objekts, wobei der Lebenszyklus durch eine Folge von Übergängen von einem Zustand zum anderen bestimmt wird, wobei die besagten Zustände die vom Objekt angebotenen Dienste bestimmen, wobei das besagte Objekt eine Verarbeitungseinheit (2), einen flüchtigen Speicher (3), Programmspeicher (4) und Datenspeicher (5) umfasst, wobei jeder dieser Speicher (3, 4, 5) einen eine Vielzahl von Konfigurationen definierenden Inhalt aufweist,
wobei das besagte Verfahren innerhalb des Objekts nach einem Zustandsübergangswunsch umgesetzt wird,
**dadurch gekennzeichnet, dass** es die folgenden Schritte umfasst:
- einen Bestätigungsschritt (51, 511, 528, 521) der Zulassung des besagten Wunsches durch Nutzung der Zulassungs- und/oder Untersagungsmittel der Zustandsübergänge, so dass nur bestimmte Übergänge von allen möglichen Übergängen erlaubt sind, wobei der besagte Schritt darin besteht, eine Tabelle (11) der erlaubten Übergänge zu analysieren;
- einen Änderungsschritt (56, 516, 526) des aktuellen Zustands des Objekts, wenn der gewünschte Übergang erlaubt ist (51, 511, 528, 521).

12. Verfahren gemäß Anspruch 11, **dadurch gekennzeichnet, dass** es einen Ausführungsschritt (53, 513, 523) systematischer Aktionen umfasst, die in Zusammenhang mit dem gewünschten Übergang stehen.

13. Verfahren gemäß einem der Ansprüche 11 oder 12, **dadurch gekennzeichnet, dass** es umfasst:
- einen Beurteilungsschritt (52, 512, 522) der Prüfungen der Konfiguration des Objekts, die mit einem erlaubten Übergang in Zusammenhang stehen,
- und dass der Änderungsschritt (56, 516, 526) des aktuellen Zustands des Objekts erfolgt, wenn die besagten Prüfungen der Konfiguration des Objekts zufrieden stellend sind (54, 514, 524).

14. Verfahren gemäß Anspruch 13, **dadurch gekennzeichnet, dass** es einen Ausführungsschritt (57, 517, 527) von positiven Aktionen umfasst, der durchgeführt wird, wenn der gewünschte Übergang erlaubt ist (51, 511, 528, 521) und wenn die mit dem gewünschten Übergang in Zusammenhang stehenden Prüfungen zufrieden stellend sind (54, 514, 524).

15. Verfahren gemäß einem der Ansprüche 13 oder 14, **dadurch gekennzeichnet, dass** es einen Ausführungsschritt (55, 515, 525) von negativen Aktionen umfasst, wenn die mit dem gewünschten Übergang in Zusammenhang stehenden Prüfungen nicht zufrieden stellend sind (54, 514, 524).

16. Verfahren gemäß einem der Ansprüche 11 bis 12, **dadurch gekennzeichnet, dass** es einen Ausführungsschritt (57, 517, 527) von positiven Aktionen umfasst, der durchgeführt wird, wenn der gewünschte Übergang erlaubt ist (51, 511, 528, 521).

17. Verfahren gemäß Anspruch 12, **dadurch gekennzeichnet, dass** der Ausführungsschritt (53) systematischer Aktionen darin besteht:
- einen Eingang (400, 401) einer dem gewünschten Übergang entsprechenden Aktionstabelle (13) zu nutzen, und
- ein durch den besagten Eingang definiertes Aktionsprogramm (404) auszuführen.

18. Verfahren gemäß einem der Ansprüche 13 bis 15, **dadurch gekennzeichnet, dass** der Beurteilungsschritt (52) der mit dem gewünschten Übergang in Zusammenhang stehenden Prüfungen darin besteht:
- einen Eingang (30) einer Tabelle (12) der Prüfungen zu nutzen, und
- eine von dem besagten Eingang definiertes Prüfprogramm (32) auszuführen.

19. Verfahren gemäß Anspruch 14, **dadurch gekennzeichnet, dass** wenn der gewünschte Übergang erlaubt ist (51) und die mit dem gewünschten Übergang in Zusammenhang stehenden Prüfungen zufrieden stellend sind (54), der Ausführungsschritt (56) positiver Aktionen darin besteht:
- einen Eingang (400, 402) einer Aktionstabelle (13) zu nutzen, der dem gewünschten Übergang entspricht, und
- ein von dem besagten Eingang definiertes Aktionsprogramm (405) auszuführen.

20. Verfahren gemäß Anspruch 15, **dadurch gekennzeichnet, dass** der Ausführungsschritt (55) negativer Aktionen, wenn die mit dem gewünschten Übergang in Zusammenhang stehenden Prüfungen nicht zufrieden stellend sind (54), darin besteht:
- einen Eingang (400, 403) der Aktionstabelle (13) zu nutzen, der dem gewünschten Übergang entspricht, und
- ein von dem besagten Eingang definiertes Aktionsprogramm (406) auszuführen.

21. Verfahren gemäß Anspruch 15, **dadurch gekennzeichnet, dass** der Ausführungsschritt (56) positiver Aktionen, wenn der gewünschte Übergang erlaubt ist, darin besteht:
- einen Eingang (400, 402) einer Aktionstabelle (13) zu nutzen, der dem gewünschten Übergang entspricht, und
- ein von dem besagten Eingang definiertes Aktionsprogramm (405) auszuführen.

22. Verfahren gemäß einem der Ansprüche 11 bis 16, das im Objekt umgesetzt wird nach einem Übergangswunsch von einem ersten zusätzlichen Zustand in einen zweiten zusätzlichen Zustand, **dadurch gekennzeichnet, dass** der Bestätigungsschritt (511) der Zulassung des besagten Wunsches darin besteht, eine Erweiterung (16) der Tabelle (11) der erlaubten Übergänge zu analysieren.

23. Verfahren gemäß Anspruch 22, wenn dieser von dem Anspruch 12 abhängig ist, **dadurch gekennzeichnet, dass** der Ausführungsschritt (513) systematischer Aktionen darin besteht:
- einen Eingang (407, 408) einer Erweiterung (18) einer Aktionstabelle (13) zu nutzen, der dem gewünschten Übergang entspricht, und
- ein von dem besagten Eingang definiertes Aktionsprogramm (411) auszuführen.

24. Verfahren gemäß einem der Ansprüche 22 oder 23, wenn der Anspruch 22 von den Ansprüchen 12 bis 15 abhängt, **dadurch gekennzeichnet, dass** der Beurteilungsschritt (512) der mit dem gewünschten Übergang in Zusammenhang stehenden Prüfungen darin besteht:
- einen Eingang (33) einer Erweiterung (17) einer Prüfungstabelle (12) zu nutzen, und
- ein von dem besagten Eingang definiertes Prüfprogramm (35) auszuführen.

25. Verfahren gemäß einem der Ansprüche 22 bis 24, wenn der Anspruch 22 von dem Anspruch 14 abhängt, **dadurch gekennzeichnet, dass** der Ausführungsschritt (516) positiver Aktionen, wenn der gewünschte Übergang erlaubt ist (511) und die mit dem gewünschten Übergang in Zusammenhang stehenden Prüfungen erfüllt sind (514), darin besteht:
- einen Eingang (407, 409) einer Erweiterung (18) einer Aktionstabelle (13) zu nutzen, der dem gewünschten Übergang entspricht, und
- ein von dem besagten Eingang definiertes Aktionsprogramm (412) auszuführen.

26. Verfahren gemäß einem der Ansprüche 22 bis 25, wenn der Anspruch 22 von dem Anspruch 15 abhängt, **dadurch gekennzeichnet**, das der Ausführungsschritt (515) negativer Aktionen, wenn die mit dem gewünschten Übergang in Zusammenhang stehenden Prüfungen nicht erfüllt sind (514), darin besteht:
- einen Eingang (407, 410) einer Erweiterung (18) einer Aktionstabelle (13) zu nutzen, der dem gewünschten Übergang entspricht, und
- ein von dem besagten Eingang definiertes Aktionsprogramm (413) auszuführen.

27. Verfahren gemäß einem der Anspruche 22 bis 23, wenn der Anspruch 22 von dem Anspruch 16 abhängt, **dadurch gekennzeichnet, dass** der Ausführungsschritt (516) positiver Aktionen, wenn der Übergangswunsch erlaubt ist (511), darin besteht:
- einen Eingang (407, 409) einer Erweiterung (18) einer Aktionstabelle (13) zu nutzen, der dem gewünschten Übergang entspricht, und
- ein von dem besagten Eingang definiertes Aktionsprogramm (412) auszuführen.

28. Verfahren gemäß einem der Ansprüche 11 bis 16, das im Objekt umgesetzt wird nach einem Übergangswunsch von einem Referenzzustand in einen zusätzlichen Zustand, **dadurch gekennzeichnet, dass** der Bestätigungsschritt (528, 521) der Zulassung des besagten Wunsches darin besteht,
- die Zulassung eines Übergangs von dem besagten Referenzzustand in einen zusätzlichen Zustand durch Analyse der Tabelle (11) der erlaubten Übergänge zu bestätigen (528),
- die Zulassung eines Übergangs von dem besagten Referenzzustand in den besagten zusätzlichen Zustand durch Analyse einer Erweiterung (16) der Tabelle (11) der erlaubten Übergänge zu bestätigen (521).

29. Verfahren gemäß Anspruch 28, wenn dieser von dem Anspruch 12 abhängig ist, **dadurch gekennzeichnet, dass** der Ausführungsschritt (513) systematischer Aktionen darin besteht:
- einen Eingang (407, 408) einer Erweiterung (18) einer Aktionstabelle (13) zu nutzen, der dem gewünschten Übergang entspricht, und
- ein von dem besagten Eingang definiertes Aktionsprogramm (411) auszuführen.

30. Verfahren gemäß einem der Ansprüche 28 oder 29, wenn der Anspruch 28 von den Ansprüchen 13 bis 15 abhängt, **dadurch gekennzeichnet, dass** der Beurteilungsschritt (522) der mit dem gewünschten Übergang in Zusammenhang stehenden Prüfungen darin besteht:
- einen Eingang (33) einer Erweiterung (17) einer Prüfungstabelle (12) zu nutzen, und
- ein von dem besagten Eingang definiertes Prüfprogramm (35) auszuführen.

31. Verfahren gemäß einem der Ansprüche 28 bis 30, wenn der Anspruch 28 von dem Anspruch 14 abhängt, **dadurch gekennzeichnet, dass** der Ausführungsschritt (526) positiver Aktionen, wenn der gewünschte Übergang erlaubt ist (528, 521) und die mit dem gewünschten Übergang in Zusammenhang stehenden Prüfungen erfüllt sind (524), darin besteht:
- einen Eingang (407, 409) einer Erweiterung (18) einer Aktionstabelle (13) zu nutzen, der dem gewünschten Übergang entspricht, und
- ein von dem besagten Eingang definiertes Aktionsprogramm (412) auszuführen.

32. Verfahren gemäß einem der Ansprüche 28 bis 30, wenn der Anspruch 28 von dem Anspruch 15 abhängt, **dadurch gekennzeichnet, dass** der Ausführungsschritt (525) negativer Aktionen, wenn die mit dem gewünschten Übergang in Zusammenhang stehenden Prüfungen nicht erfüllt sind (524), darin besteht:
- einen Eingang (407, 410) einer Erweiterung (18) einer Aktionstabelle (13) zu nutzen, der dem gewünschten Übergang entspricht, und
- ein von dem besagten Eingang definiertes Aktionsprogramm (413) auszuführen.

33. Verfahren gemäß einem der Anspruche 28 bis 29, wenn der Anspruch 28 von dem Anspruch 16 abhängt, **dadurch gekennzeichnet, dass** der Ausführungsschritt (526) positiver Aktionen, wenn der Übergangswunsch erlaubt ist (528, 521), darin besteht:
- einen Eingang (407, 409) einer Erweiterung (18) einer Aktionstabelle (13) zu nutzen, der dem gewünschten Übergang entspricht, und
- ein von dem besagten Eingang definiertes Aktionsprogramm (412) auszuführen.

34. Verfahren gemäß einem der Ansprüche 11 bis 33, **dadurch gekennzeichnet, dass** das besagte Verfahren keine Freigabe eines Zustandsübergangs von einem zusätzlichen Zustand in einen Referenzzustand erlaubt.

## Claims

1. A device for controlling the life cycle of a portable electronic object, the life cycle being determined by a succession of state transitions, the said state determining the services offered by the object, the said object comprising a processing unit (2), a volatile memory (3), program memories (4) and data memories (5), each of these memories (3, 4, 5) having a content defining a plurality of configurations,
**characterised in that** the device comprises means of controlling the transition from a first state to a second state of the portable electronic object, using means of enabling and/or inhibiting state transitions, enabling and/or inhibiting a state transition by using a table (11) of permitted state transitions, so that only certain transitions are permitted from amongst all the possible transitions.

2. A device according to Claim 1, **characterised in that** the control means comprise means of verifying the content of the volatile memory (3), of the data memories (5) and of the program memories (4) of the portable electronic object, according to the state transition permitted to be carried out.

3. A device according to Claim 1 or 2, **characterised in that** the control means comprise:
- apart from the table (11) of permitted state transitions;
- a table (12) of checks to be made per permitted state transition,
- and a verification engine (9) using the said tables.

4. A device according to either one of Claims 1 to 2, **characterised in that** the means of controlling the transition from a first state to a second state of the portable electronic object comprise:
- an extension (16) to the table (11) of permitted state transitions.

5. A device according to Claim 3, **characterised in that** the means of controlling the transition from a first state to a second state of the portable electronic object comprise:
- an extension (16) to the table (11) of permitted state transitions;
- an extension (17) to the table (12) of checks to be made per permitted state transition;
- and **in that** the verification engine (9) uses the said table extensions (16, 17).

6. A device according to any one of Claims 1 to 5, **characterised in that** the control means comprise means for triggering actions during the processing of a request to make a transition from a first state to a second state of the portable electronic object.

7. A device according to Claim 6, when the latter depends on Claims 4 or 5, **characterised in that** the means for triggering actions during the processing of a request to make a transition from a first state to a second state of the portable electronic object comprise a table (13) of actions that can be used by the verification engine (9).

8. A device according to Claim 7, **characterised in that** the means for triggering actions during the processing of a request to make a transition from a first state to a second state of the portable electronic object comprise an extension (18) to the table (13) of actions that can be used by the verification engine (9).

9. A portable electronic object, comprising a processing unit (2), a volatile memory (3), program memories (4) and data memories (5), **characterised in that** it comprises the device for controlling the life cycle of the object, according to one of Claims 1 to 8.

10. A chip card, comprising a processing unit (2), a volatile memory (3), program memories (4) and data memories (5), **characterised in that** it comprises the device for controlling the life cycle of the card, according to one of Claims 1 to 8.

11. A method of controlling the life cycle of a portable electronic object, the life cycle being determined by a succession of state transitions, the said states determining the services offered by the object, the said object comprising a processing unit (2), a volatile memory (3), program memories (4) and data memories (5), each of these memories (3, 4, 5) having a content defining a plurality of configurations,
the said method being implemented, within the object, following a state transition request,
**characterised in that** it comprises:
- a step (51, 511, 528, 521) validating the enabling of the said request using means of enabling and/or inhibiting state transitions, so that only certain transitions are permitted from amongst all possible transitions, the said step consisting of analysing a table (11) of permitted transitions;
- a step (56, 516, 526) of modifying the current state of the object if the transition requested is enabled (51, 511, 528, 521).

12. A method according to Claim 11, **characterised in that** it comprises a step (53, 513, 523) of execution of systematic actions, actions associated with the requested transition.

13. A method according to either one of Claims 11 or 12, **characterised in that** it comprises:
- a step (52, 512, 522) of evaluating checks on the configuration of the object, checks associated with a permitted transition;
- and **in that** the step (56, 516, 526) of modifying the current state of the object is performed if the said checks on the configuration of the object are satisfied (54, 514, 524).

14. A method according to the Claim 13, **characterised in that** it comprises a step (57, 517, 527) of executing positive actions that is performed if the transition requested is permitted (51, 511, 528, 521), and if the checks associated with the requested transition are satisfied (54, 514, 524).

15. A method according to either one of Claims 13 or 14, **characterised in that** it comprises a step (55, 515, 525) of executing negative actions if the checks associated with the transition requested are not satisfied (54, 514, 524).

16. A method according to any one of Claims 11 to 12, **characterised in that** it comprises a step (57, 517, 527) of executing positive actions that is performed if the requested transition is permitted (51, 511, 528, 521).

17. A method according to Claim 12, **characterised in that** the step (53) of performing systematic actions consists of:
- using an input (400, 401), corresponding to the requested transition, of a table (13) of actions, and
- executing a program of actions (404) defined by the said input.

18. A method according to any one of Claims 13 to 15, **characterised in that** the step (52) of evaluating the checks associated with the requested transition consist of:
- using an input (30) of a table (12) of checks, and
- executing a program (32) of checks defined by the said input.

19. A method according to Claim 14, **characterised in that** the step (56) of executing positive actions consists, if the transition requested is enabled (51) and the checks associated with the requested transition are satisfied (54):
- of using an input (400, 402), corresponding to the requested transition, of a table (13) of actions, and
- of executing a program (405) of actions defined by the said input.

20. A method according to Claim 15, **characterised in that** the step (55) of executing negative actions consist, if the checks associated with the requested transition are not satisfied (54):
- of using an input (400, 403), corresponding to the requested transition, of the table (13) of actions, and
- of executing a program (406) of actions defined by the said input.

21. A method according to Claim 16, **characterised in that** the step (56) of executing positive actions consists, if the requested transition is enabled (51),
- of using an input (400, 402), corresponding to the requested transition, of a table (13) of actions, and
- of executing a program (405) of actions defined by the said input.

22. A method according to any one of Claims 11 to 16, implemented within the object, following a request for transition from a first additive state to a second additive state, **characterised in that** the step (511) of validating the enabling of the said request consists of analysing an extension (16) of the table (11) of permitted transitions.

23. A method according to Claim 22, when the latter depends on Claim 12, **characterised in that** the step (513) of executing systematic actions consists of:
- using an input (407, 408), corresponding to the requested transition, of an extension (18) to a table (13) of actions, and
- executing a program of actions (411) defined by the said input.

24. A method according to either one of Claims 22 or 23, when Claim 22 depends on Claims 13 to 15, **characterised in that** the step (512) of evaluating the checks associated with the requested transition consists of:
- using an input (33) of an extension (17) to a table (12) of checks, and
- executing a program (35) of checks defined by the said input.

25. A method according to any one of Claims 22 to 24, when Claim 22 depends on Claim 14, **characterised in that** the step (516) of executing positive actions consists, if the requested transition is enabled (511) and the checks associated with the requested transition are satisfied (514):
- of using an input (407, 409), corresponding to the requested transition, of an extension (18) to a table (13) of actions, and
- of executing a program of actions (412) defined by the said input.

26. A method according to any one of Claims 22 to 25, when Claim 22 depends on Claim 15, **characterised in that** the step (515) of executing negative actions consists, if the checks associated with the requested transition are not satisfied (514):
- of using an input (407, 410), corresponding to the requested transition, of an extension (18) to a table (13) of actions, and
- of executing a program of actions (413) defined by the said input.

27. A method according to any one of Claims 22 to 23, when Claim 22 depends on Claim 16, **characterised in that** the step (516) of executing positive actions consists, if the requested transition is enabled (511):
- of using an input (407, 409), corresponding to the requested transition, of an extension (18) to a table (13) of actions, and
- of executing a program of actions (412) defined by the said input.

28. A method according to any one of Claims 11 to 16, implemented within the object, following a request for transition from a reference state to an additive state, **characterised in that** the step (528, 521) of validating the enabling of the said request consists of:
- validating (528) the enabling of a transition from the said reference state to an additive state by analysing the table (11) of permitted transitions;
- validating (521) the enabling of a transition from the said reference state to the said additive state by analysing an extension (16) to the table (11) of permitted transitions.

29. A method according to Claim 28, when the latter depends on Claim 12, **characterised in that** the step (513) of executing systematic actions consists of:
- using an input (407, 408), corresponding to the requested transition, of an extension (18) to a table (13) of actions, and
- executing a program of actions (411) defined by the said input.

30. A method according to either one of Claims 28 or 29, when Claim 28 depends on Claims 13 to 15, **characterised in that** the step (522) of evaluating the checks associated with the requested transition consists of:
- using an input (33) of an extension (17) to a table (12) of checks, and
- executing a program (35) of checks defined by the said input.

31. A method according to any one of Claims 28 to 30, when Claim 28 depends on Claim 14, **characterised in that** the step (526) of executing positive actions consists, if the requested transition is enabled (528, 521) and the checks associated with the requested transition are satisfied (524):
- of using an input (407, 409), corresponding to the requested transition, of an extension (18) to a table (13) of actions, and
- of executing a program of actions (412) defined , by the said input.

32. A method according to any one of Claims 28 to 30, when Claim 28 depends on Claim 15, **characterised in that** the step (525) of executing negative actions consists, if the checks associated with the requested transition are not satisfied (524):
- of using an input (407, 410), corresponding to the requested transition, of an extension (18) to a table (13) of actions, and
- of executing a program of actions (413) defined by the said input.

33. A method according to either one of Claims 28 to 29, when Claim 28 depends on Claim 16, **characterised in that** the step (526) of executing positive actions consists, if the requested transition is enabled (528, 521):
- of using an input (407, 409), corresponding to the requested transition, of an extension (18) to a table (13) of actions, and
- of executing a program of actions (412) defined by the said input.

34. A method according to any one of Claims 11 to 33, **characterised in that** the said method does not enable the making of a state transition from an additive state to a reference state.
